# EUROPÄISCHE PATENTSCHRIFT

(11) **EP 1 084 056 B1**
(45) Veröffentlichungstag und Bekanntmachung des Hinweises auf die Patenterteilung: **05.11.2003**
(21) Anmeldenummer: 00912650.9
(22) Anmeldetag: 28.03.2000
(51) Int. Cl.: B62M 25/04

(54) **DREHGRIFFSCHALTER FÜR FAHRRÄDER**
TWIST GRIP SHIFT LEVER FOR BICYCLES
DISPOSITIF DE COMMANDE POUR POIGNEE TOURNANTE POUR CYCLES

(30) Priorität: 03.04.1999 DE 19915333
(43) Veröffentlichungstag der Anmeldung: 21.03.2001
(73) Patentinhaber: SRAM Deutschland GmbH, 97404 Schweinfurt (DE)
(72) Erfinder: WESSEL, Robert, D-97080 Würzburg (DE)
(86) Internationale Anmeldenummer: EP0002707
(87) Internationale Veröffentlichungsnummer: WO00059775

(56) Entgegenhaltungen:
- DE-A- 19 723 346
- US-A- 5 588 331

## Beschreibung

Die Erfindung bezieht sich auf einen Drehgriffschalter für Fahrräder gemäß dem Oberbegriff des Anspruchs 1.

Mit der deutschen Patentanmeldung DE 197 23 346.5 ist ein Schalter zur Steuerung von Getrieben an Fahrrädern, insbesondere ein Drehgriffschalter zur Montage an einer Lenkstange bekannt geworden, der aus einem mit der Lenkstange verbundenen feststehenden Gehäuse und aus einem axial mit diesem feststehenden Gehäuse festgelegten, von Hand verdrehbarem Gehäuse besteht, wobei das feststehende und das verdrehbare Gehäuse eine Einheit bilden, wobei weiter das verdrehbare Gehäuse einen Innenzylinder mit nach außen weisenden Ausnehmungen und das feststehende Gehäuse einen Außenzylinder mit Bajonetthaken an seiner axial äußeren Stirnfläche aufweisen, wobei ferner das verdrehbare Gehäuse mit seinem Innenzylinder auf dem Außenzylinder des feststehenden Gehäuses aufschiebbar ist und eine Lagerstelle bildet, wobei schließlich durch Verdrehen des verdrehbaren Gehäuses gegenüber dem feststehenden Gehäuse bis zu einem Einrastpunkt die beiden Gehäuse unlösbar miteinander verbindbar sind.

Die Anordnung der Bajonetthaken an dem Innenzylinder bildet eine fertigungstechnische Problemzone hinsichtlich der Entformung der Hauptformhälften einer Spritzform insofern, als die Lagerstelle nur dann einwandfrei ausgebildet ist, wenn Maßnahmen zur zusätzlichen Ausformung der Partie hinter den Bajonetthaken ergriffen werden. Es entstehen Hinterschneidungen, die an sich homogenen Oberflächen Teilungsgrate und Formungenauigkeiten verursachen, die insbesondere dann von Nachteil sind, wenn solche Oberflächen mit korrespondierenden Oberflächen zur Bildung einer Lagerstelle gepaart werden sollen. Meistens ist kostenerhöhende Nacharbeit zur Beseitigung dieser Grate erforderlich. Es wird daher vorgeschlagen, einen Drehgriffschalter für Fahrräder mit einem feststehenden Gehäuse zu schaffen, welches einen das Lenkerrohr umgreifenden Zylinderfortsatz zur Lagerung eines Drehteils aufweist, wobei dieser Zylinderfortsatz so gestaltet ist, daß keine Konturen über den Außendurchmesser dieses Zylinderfortsatzes hinausgehen. Zur rationellen Fertigungsweise gehört ferner, daß ein Gehäusefortsatz, der eine Seilspule am Drehteil umgreift und zum Gehäuseteil gehört, ebenfalls gemeinsam mit dem Außendurchmesser des Zylinderfortsatzes hinsichtlich der Ausbildung seiner funktionellen Konturen mit Hilfe eine einzigen Formhälfte einer Spritzform durch ein Materialspritzverfahren herstellbar ist. Der Vorteil dieser Fertigungsmethode ist eine homogene Zylinderoberfläche des Zylinderfortsatzes, der als Lagerstelle für das Drehteil dient und daher keine Teilungsgrate oder Formungenauigkeiten aufweist, die die Funktion bei der Betätigung des Drehgriffschalters beeinträchtigen können. Das vorgenannte Fertigungsverfahren für den Zylinderfortsatz ist geeignet, an diesen Zungen anzuspritzen, die Halteprofile aufweisen, um mit Rastprofilen eines Ringes lösbar gefügt zu werden. Die Halteprofile bestehen aus Durchbrüchen, da sie nicht über die von den beiden Durchmessern vorgegebenen Grenzen hinausragen dürften. Die Rastprofile am Ring sind als Haken gestaltet, die in die Durchbrüche in den Zungen eingreifen können.

Das Drehteil mit der Seilspule läßt sich durch ein Griffteil aus gummielastischem Material umspritzen, wodurch sich weitere Gestaltungsmöglichkeiten ergeben: Es kann eine nach radial innen gerichtete Lippe angeformt werden, die an der der Seilspule gegenüberliegenden Seite über die Gesamtlänge des Drehteils hinausgeht und im Einbauzustand in eine nach radial außen weisende Nut eingreift, die in dem Ring angeordnet ist. Auf diese Weise läßt sich die Lagerstelle zwischen dem Drehteil und dem Zylinderfortsatz von eindringenden Schmutz freihalten, was die Funktion der geschmierten Lagerstelle über längere Zeit garantiert.

Es ergibt sich somit die Aufgabe für die Erfindung, eine Gehäuseteil für einen Drehgriffschalter in der Weise zu gestalten, daß es einen Zylinderfortsatz mit einer äußeren Funktionsfläche und einen Gehäusefortsatz mit Innenkonturen durch ein Materialspritzverfahren so herzustellen, daß die vorgenannten Formen mit Hilfe einer einzigen Formhälfte der Spritzform hinterschnittfrei und ohne Formfehler herstellbar sind.

Die Lösung der Aufgabe ist in dem Kennzeichen des Hauptanspruches beschrieben. Ausgestaltungen sind den Unteransprüchen zu entnehmen.

Anhand mehrerer Zeichnungen wird die axiale Festlegung des Drehteils auf dem Gehäuseteil erläutert. Es zeigen:
- Fig. 1: eine dreiteilige Explosionszeichnung in perspektivischer Darstellung mit einem Gehäuseteil, einem Drehteil und einem Ring als axiale Festlegung des Drehteils auf dem Gehäuseteil über Zungen an einem Zylinderfortsatz des Gehäuseteils;
- Fig. 2: einen Drehgriffschalter in Explosivdarstellung mit einem Ring, der von den Zungen durch Drehen lösbar ist;
- Fig. 3: den Drehgriffschalter gemäß Fig. 1 in Halbschnittdarstellung;
- Fig. 4: den Drehgriffschalter gemäß Fig. 2 in Halbschnittdarstellung.

Werden mit 1, 1a ein Gehäuseteil für zwei Drehgriffschaltervarianten bezeichnet, so läßt sich dieses auf einem Lenkerrohr einer Lenkstange eines Fahrrades befestigen, wobei dieses Gehäuseteil 1,1a derart gestaltet ist, daß ein Zugseil zur Steuerung eines Fahrradgetriebes gezogen und freigegeben werden kann. Dieses Zugseil ist mit einem Drehteil 3,3a über eine daran angeordnete Seilspule 4,4a verbunden und wird durch deren Drehung in Bewegung versetzt. Das Drehteil 3,3a ist mit dem festen Gehäuseteil 1,1a verbunden, wobei das Drehteil 3,3a auf einem mit dem Gehäuseteil 1,1a verbundenen Zylinderfortsatz 2,2a drehbar gelagert ist. Dieser Zylinderfortsatz 2,2a weist in axialer vom Gehäuseteil 1,1a wegweisender Richtung Zungen 9,9a auf, die Halteprofile 10,10a aufweisen, die mit Rastprofilen 11, 11a eines Ringes 12,12a fügbar sind. Wird nun das Drehteil 3,3a über die Zungen 9,9a auf den Zylinderfortsatz 2,2a im Gehäuseteil 1,1a geschoben, so ist dieses gegen das Gehäuseteil 1,1a axial festgelegt und auf dem Zylinderfortsatz 2,2a drehbar gelagert.

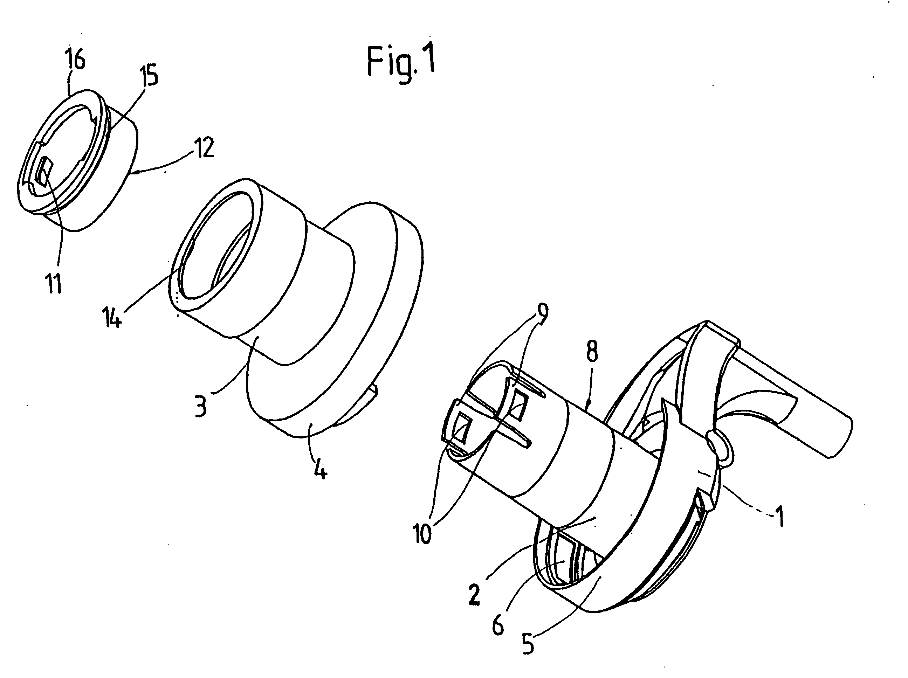

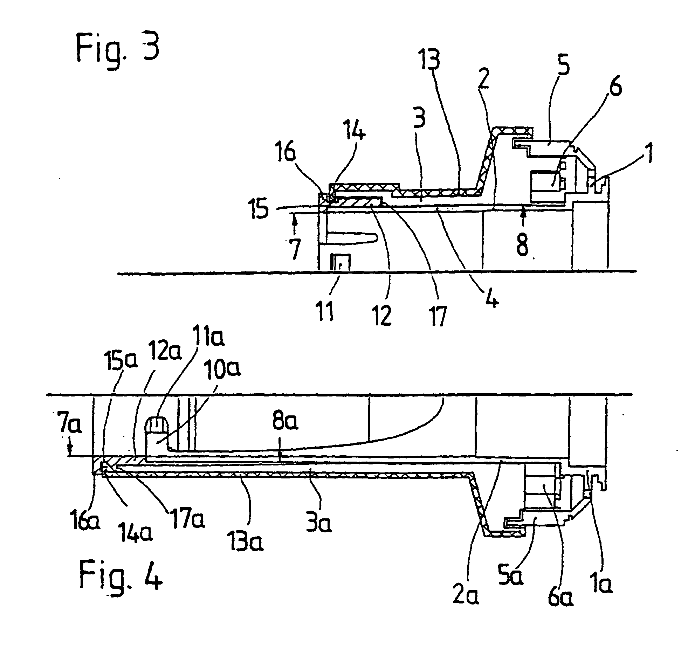

Der Ring 12 kann gemäß den Fig. 1 und 3 über die Zungen 9 innerhalb des Drehteils 3 soweit eingeschoben werden, bis die Rastprofile 11 des Ringes 12 mit den Halteprofilen 10 der Zungen 9 eine Fügeverbindung eingehen, wobei sich während der Montage die Zungen 9 nach radial innen verbiegen müssen. Sobald die Rastprofile 11 mit den Halteprofilen 10 eine Fügeverbindung eingegangen sind, ist das Drehteil 3 durch eine Stirnfläche 17 axial gegen den Ring 12 und in der anderen Richtung gegen das Gehäuseteil 1 axial festgelegt.

Der Zylinderfortsatz 2,2a mit seinen Zungen 9,9a weist gemäß den Fig. 1 bis 4 einen kleinsten Innendurchmesser 7 auf, der dem Durchmesser des Lenkerrohres entspricht. Die Lagerstelle für das Drehteil 3,3a weist einen Außendurchmesser 8,8a auf, dem die angeformten Zungen 9,9a mit ihren Halteprofilen 10,10a nicht überschreiten dürfen, um die spritztechnische Herstellung dieser Teile mit Hilfe einer einzigen Formhälfte einer Spritzform durch ein Materialspritzverfahren zu garantieren. Eine rationelle Fertigung des Gehäuseteils 1,1a ist jedoch erst dann möglich, wenn ein Gehäusefortsatz 5,5a, welcher am Gehäuseteil 1,1a angeformt ist und einen Ringraum bildet, der die Seilspule 4,4a im wesentlichen umgreift, wobei zur Sicherstellung der Funktion der beiden Teile Innenkonturen 6,6a im Gehäusefortsatz 5,5a angeordnet sind, die ebenfalls durch diese Formhälfte der Spritzform gestaltet werden können. Gemäß der Aufgabe wird somit sichergestellt, daß die Lagerstelle auf einer Funktionsfläche auf dem Zylinderfortsatz 2,2a und die Innenkonturen 6,6a im Gehäusefortsatz 5,5a kostengünstig und mit einer optimalen Formtreue hergestellt werden können. Hierzu ist es erforderlich, daß die Halteprofile 10,10a an den Zungen 9,9a die Durchmesser 7,7a und 8,8a nicht überragen dürfen.

Das Drehteil 3,3a weist an seiner nach radial außen weisenden Oberfläche ein mit dieser verbundenes Griffteil 13,13a auf, welches aus gummielastischem Material besteht und der besseren Bedienung durch die Hand des Fahrradlenkers dient. Dieses Griffteil 13,13a weist eine über die axiale Länge des Drehteils 3,3a hinausgehende Lippe 14,14a auf, die nach radial innen weist und in eine Nut 15,15a des Ringes 12,12a reicht, wodurch eine labyrinthartige Abdichtung gegen Verschmutzung der Lagerstelle von außen entsteht. Die Nut 15,15a wird durch einen äußeren axial abschließenden Bund 16,16a des Ringes 12,12a gebildet, wobei der Bund 8,8a die gegen Stoß empfindliche Stirnfläche des Griffteils 13,13a schützt. Gemäß den Fig. 3 und 4 ist ersichtlich, daß bei der Montage des Ringes 12,12a die Lippe 14,14a elastisch verformt werden muß, um in die Nut 15,15a einzutauchen.Ebenso zeigen die Fig. 3 und 4 den Drehgriffschalter als Zusammenbau, wie er auf das Lenkerrohr der Lenkstange des Fahrrades aufgeschoben und dort mit einer hier nicht dargestellten Schraub- oder Klemmverbindung festgelegt werden kann.

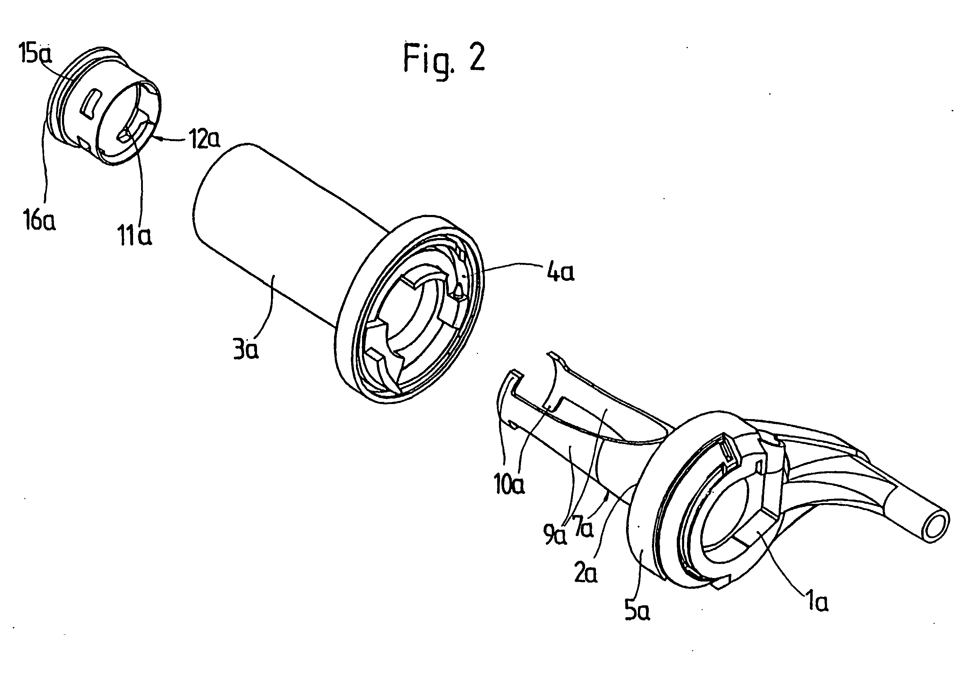

Das Ausführungsbeispiel eines Drehgriffschalters gemäß den Fig. 2 und 4 zeigt das Gehäuseteil 1a mit dem Zylinderfortsatz 2a und den Zungen 9a sowie das Drehteil 3a und mit dem Ring 12a. Während die Halteprofile 10 der ersten Drehgriffschaltervariante als Durchbrüche ausgebildet sind, weisen die Zungen 9a der zweiten Drehgriffschaltervariante gemäß Fig. 2 und 4 T-förmige Halteprofile 10a auf, die mit entsprechend geformten Rastprofilen 11a im Ring 12a zusammenwirken können, wobei der Unterschied zu der Montage des Ringes 12 mit den Zungen 9 bei der ersten Drehgriffschaltervariante darin besteht, daß die einmal eingerasteten Halteprofile 10a der Zungen 9a aus den Rastprofilen 11a durch Drehen des Ringes 12a ausgeklinkt werden können. Hierbei weichen die Zungen 9a nach radial innen aus und der Ring 12a kann axial abgezogen werden, allerdings nur so lange, wie der Schalter noch nicht auf dem Lenkerrohr der Lenkstange des Fahrrades montiert ist. Es soll noch einmal darauf hingewiesen sein, daß die Funktionsfläche des Zylinderfortsatzes 2a mit dem Außendurchmesser 8a mit einer einzigen Formhälfte spritzbar ist, wobei die T-förmigen Halteprofile 10a diesen Außendurchmesser 8a nicht übersteigen.

## Patentansprüche

1. Drehgriffschalter für Fahrräder zur Montage vorzugsweise im Griffbereich eines Lenkerrohres einer Lenkstange, bestehend aus einem lenkerfesten Gehäuseteil (1,1a) mit einem das Lenkerrohr umgreifenden Zylinderfortsatz (2,2a), auf welchem ein Drehteil (3,3a) mit einer Seilspule (4,4a) angeordnet ist, sowie mit einem das Drehteil (3,3a) im Bereich der Seilspule (4,4a) wenigstens teilweise umgreifenden Gehäusefortsatz (5,5a) mit einer Innenkontur (6,6a), wobei der Zylinderfortsatz (2,2a) mit einem Ring (12,12a) eine Fügeverbindung eingehen kann,
**dadurch gekennzeichnet,**
**daß** der Zylinderfortsatz (2,2a) mit einem kleinstmöglichen gegenüber einem Durchmesser (7,7a) des Lenkerrohres um seine Wandstärke vergrößerten Außendurchmesser (8,8a) gemeinsam mit der Innenkontur (6,6a) des Gehäusefortsatzes (5,5a) herstellbar ist, wobei die Innenkontur (6,6a) und der Außendurchmesser (8,8a) mit Hilfe einer einzigen Formhälfte einer Spritzform durch ein Materialspritzverfahren herstellbar sind.

2. Drehgriffschalter nach Anspruch 1,
**dadurch gekennzeichnet,**
**daß** Zungen (9,9a) am Zylinderfortsatz (2,2a) angeordnet sind, die in radialer Richtung eine beschränkte Federbeweglichkeit aufweisen.

3. Drehgriffschalter nach Anspruch 2,
**dadurch gekennzeichnet,**
**daß** an den Zungen (9,9a) Halteprofile (10,10a) angeordnet sind, die mit Rastprofilen (11, 11a) an einem Ring (12,12a) lösbar gefügt werden können.

4. Drehgriffschalter nach Anspruch 3,
**dadurch gekennzeichnet,**
**daß** die die Halteprofile (10,10a) Durchbrüche in den Zungen (9,9a) sind.

5. Drehgriffschalter nach Anspruch 2,
**dadurch gekennzeichnet,**
**daß** sich die Zungen (9,9a) mit dem Ring (12,12a) nur dann verbinden und/oder lösen lassen, wenn der Drehgriffschalter nicht mit dem Lenkerrohr verbunden ist.

6. Drehgriffschalter nach einem der Ansprüche 3 bis 5,
**dadurch gekennzeichnet,**
**daß** sich bei der Demontage des Ringes (12a) von den Zungen (9a) am Zylinderfortsatz (2a) das Rastprofil (11a) durch Drehen des Ringes (12a) relativ zum Zylinderfortsatz (2a) aus dem Halteprofil (10a) löst.

7. Drehgriffschalter nach Anspruch 1 oder 6,
**dadurch gekennzeichnet,**
**daß** das Drehteil (3,3a) einmal am Gehäuseteil (1,1a) und einmal an einer Stirnfläche (11, 11a) des Ringes (5,5a) zur Sicherung seiner axialen Position anschlagen kann.

8. Drehgriffschalter nach Anspruch 1,
**dadurch gekennzeichnet,**
**daß** das Drehteil (3,3a) von einem Griffteil (13,13a) umgeben ist, wobei das Griffteil (13,13a) aus gummielastischen Werkstoff besteht und drehfest mit dem Drehteil (3,3a) verbunden ist.

9. Drehgriffschalter nach Anspruch 1 oder 8,
**dadurch gekennzeichnet,**
**daß** das Griffteil (13,13a) durch Umspritzen des Drehteils (3,3a) herstellbar und dadurch mit diesem unlösbar verbunden ist.

10. Drehgriffschalter nach Anspruch 1,
**dadurch gekennzeichnet,**
**daß** das Griffteil (13,13a) an der der Seilspule (4,4a) gegenüberliegenden Seite eine über die Gesamtlänge des Drehteils (3,3a) hinausgehende und nach radial innen gerichtete Lippe (14,14a) aufweist, die zur Bildung einer Labyrinth-Dichtung in eine nach außen weisende Nut (15,15a) im Ring (12,12a) eintaucht.

11. Drehgriffschalter nach Anspruch 10,
**dadurch gekennzeichnet,**
**daß** der Ring (12,12a) einen Bund (16,16a) aufweist, der als axial äußere Begrenzung der Nut (15,15a) die Stirnseite des Griffteiles (13,13a) weitgehend abdeckt.

12. Drehgriffschalter nach Anspruch 1,
**dadurch gekennzeichnet,**
**daß** die dem Außendurchmesser (8,8a) beigeordnete Zylinderfläche des Zylinderfortsatzes (2,2a) als homogene Lagerstelle für das Drehteil (3,3a) ohne Teilungsgrate und Formungenauigkeiten ausgebildet ist.

## Claims

1. Twist-grip shift mechanism for bicycles to be mounted preferably in the region of the grip of a handlebar tube of handlebars, comprising a housing part (1,1a) fixed to the handlebars and having a cylindrical extension (2,2a) which surrounds the handlebar tube and on which is arranged a twisting part (3,3a) with a cable bobbin (4,4a), and having a housing extension (5,5a) that at least partially surrounds the twisting part (3,3a) in the region of the cable bobbin (4,4a) and has an inner contour (6,6a), it being possible for the cylindrical extension (2,2a) to be joined together with a ring (12,12a), **characterized in that** the cylindrical extension (2,2a) can be produced together with the inner contour (6,6a) of the housing extension (5,5a) and with the minimum possible outside diameter (8,8a), which is greater by its wall thickness than a diameter (7,7a) of the handlebar tube, the inner contour (6,6a) and the outside diameter (8,8a) being able to be produced using a single half of an injection mould by a material injection method.

2. Twist-grip shift mechanism according to Claim 1, **characterized in that** tongues (9,9a) are arranged on the cylindrical extension (2,2a) and these have a limited spring travel in the radial direction.

3. Twist-grip shift mechanism according to Claim 2, **characterized in that** retaining profiles (10, 10a), which can be joined releasably to latching profiles (11,11a) on a ring (12,12a), are arranged on the tongues (9,9a).

4. Twist-grip shift mechanism according to Claim 3, **characterized in that** the retaining profiles (10,10a) are apertures in the tongues (9,9a).

5. Twist-grip shift mechanism according to Claim 2, **characterized in that** the tongues (9,9a) can only be connected to and/or released from the ring (12,12a) when the twist-grip shift mechanism is not connected to the handlebar tube.

6. Twist-grip shift mechanism according to one of Claims 3 to 5, **characterized in that**, in the case of removal of the ring (12a) from the tongues (9a) on the cylindrical extension (2a), the latching profile (11a) is released from the retaining profile (10a) by turning the ring (12a) relative to the cylindrical extension (2a).

7. Twist-grip shift mechanism according to Claim 1 or 6, **characterized in that** the housing part (1,1a), on the one hand, and an end face (11,11a) of the ring (5,5a), on the other hand, form stops for the twisting part (3,3a) to secure it in its axial position.

8. Twist-grip shift mechanism according to Claim 1, **characterized in that** the twisting part (3,3a) is surrounded by a grip part (13,13a), the grip part (13,13a) being composed of rubber-elastic material and being rotationally fixed to the twisting part (3,3a).

9. Twist-grip shift mechanism according to Claim 1 or 8, **characterized in that** the grip part (13,13a) can be produced by encapsulating the twisting part (3,3a), thereby connecting it permanently to the latter.

10. Twist-grip shift mechanism according to Claim 1, **characterized in that**, on the side opposite the cable bobbin (4,4a), the grip part (13,13a) has a lip (14,14a) which extends beyond the overall length of the twisting part (3,3a), points radially inward and projects into an outward-facing groove (15,15a) in the ring (12,12a) to form a labyrinth seal.

11. Twist-grip shift mechanism according to Claim 10, **characterized in that** the ring (12,12a) has a collar (16,16a) which, as the axially outer boundary of the groove (15,15a), largely covers the end of the grip part (13,13a).

12. Twist-grip shift mechanism according to Claim 1, **characterized in that** the cylindrical surface of the cylindrical extension (2,2a), said surface being associated with the outside diameter (8,8a), is designed as a homogeneous bearing for the twisting part (3,3a) without parting seams and moulding inaccuracies.

## Revendications

1. Dispositif de commande pour poignée tournante pour cycles à monter de préférence au niveau de la poignée d'un tube de guidon d'un guidon, consistant en une pièce de boîtier (1, 1a) positionnée fixement sur le guidon et comportant un prolongement cylindrique (2, 2a) entourant le tube de guidon, sur laquelle est disposée une pièce rotative (3, 3a) avec une bobine de câble (4, 4a), ainsi qu'un prolongement de boîtier (5, 5a) entourant au moins partiellement la pièce rotative (3, 3a) au niveau de la bobine de câble (4, 4a) par un contour intérieur (6, 6a), le prolongement cylindrique (2, 2a) pouvant établir une liaison de jonction avec un anneau (12, 12a),
**caractérisé en ce que**
le prolongement cylindrique (2, 2a) peut être fabriqué avec un diamètre extérieur (8, 8a) agrandi de son épaisseur de paroi et aussi petit que possible par rapport à un diamètre (7, 7a) du tube de guidon en même temps que le contour intérieur (6, 6a) du prolongement de boîtier (5, 5a), le contour intérieur (6, 6a) et le diamètre extérieur (8, 8a) pouvant être fabriqués à l'aide d'une seule moitié de moule d'un moule d'injection par un procédé d'injection de matière.

2. Dispositif de commande pour poignée tournante selon la revendication 1,
**caractérisé en ce que**
sont disposées sur le prolongement cylindrique (2, 2a) des languettes (9, 9a) qui présentent dans le sens radial une mobilité de ressort limitée.

3. Dispositif de commande pour poignée tournante selon la revendication 2,
**caractérisé en ce que**
sont disposés sur les languettes (9, 9a) des profils de retenue (10, 10a) qui peuvent être assemblés de manière amovible à des profils d'enclenchement (11, 11a) sur un anneau (12, 12a).

4. Dispositif de commande pour poignée tournante selon la revendication 3,
**caractérisé en ce que**
les profils de retenue (10, 10a) sont des percées dans les languettes (9, 9a).

5. Dispositif de commande pour poignée tournante selon la revendication 2,
**caractérisé en ce que**
les languettes (9, 9a) ne peuvent être reliées et/ou détachées de l'anneau (12, 12a) que si le dispositif de commande pour poignée tournante n'est pas relié au tube du guidon.

6. Dispositif de commande pour poignée tournante selon l'une quelconque des revendications 3 à 5,
**caractérisé en ce que**
lors du démontage de l'anneau (12a) des languettes (9a) sur le prolongement cylindrique (2a), le profil d'enclenchement (11a) se détache du profil de retenue (10a) par rotation de l'anneau (12a) par rapport au prolongement cylindrique (2a).

7. Dispositif de commande pour poignée tournante selon la revendication 1 ou 6,
**caractérisé en ce que**
la pièce rotative (3, 3a) peut buter tantôt sur la pièce de boîtier (1, 1a) et tantôt sur une surface frontale (11, 11a) de l'anneau (5, 5a) pour assurer sa position axiale.

8. Dispositif de commande pour poignée tournante selon la revendication 1,
**caractérisé en ce que**
la pièce rotative (3, 3a) est entourée par une pièce de poignée (13, 13a), la pièce de poignée (13, 13a) consistant en matière première en caoutchouc élastique et étant reliée fixement en rotation à la pièce rotative (3, 3a).

9. Dispositif de commande pour poignée tournante selon la revendication 1 ou 8,
**caractérisé en ce que**
la pièce de poignée (13, 13a) peut être fabriquée en entourant par injection la pièce rotative (3, 3a) et est ainsi reliée à celle-ci de manière inamovible.

10. Dispositif de commande pour poignée tournante selon la revendication 1,
**caractérisé en ce que**
la pièce de poignée (13, 13a) présente sur son côté opposé à la bobine de câble (4, 4a) une lèvre (14, 14a) proéminente au delà de la longueur totale de la pièce rotative (3, 3a) et dirigée radialement vers l'intérieur, qui s'enfonce pour former un joint en labyrinthe dans une rainure tournée vers l'extérieur (15, 15a) dans l'anneau (12, 12a).

11. Dispositif de commande pour poignée tournante selon la revendication 10,
**caractérisé en ce que**
l'anneau (12, 12a) présente un cercle (16, 16a) qui recouvre largement en tant que limitation axialement extérieure de la rainure (15, 15a) la face frontale de la pièce de poignée (13, 13a).

12. Dispositif de commande pour poignée tournante selon la revendication 1,
**caractérisé en ce que**
la surface cylindrique du prolongement cylindrique (2, 2a) en corrélation avec le diamètre extérieur (8, 8a) est conformée comme un point de palier homogène pour la pièce rotative (3, 3a) sans bavures de division ni imprécisions de moulage.
